Europäisches Patentamt

European Patent Office

Office européen des brevets

(11) Veröffentlichungsnummer: **0 256 968**
**A1**

(12) **EUROPÄISCHE PATENTANMELDUNG**

(21) Anmeldenummer: 87730044.2

(22) Anmeldetag: 21.04.87

(51) Int. Cl.⁴: **G 01 B 11/24**
G 01 B 11/00

(30) Priorität: 23.07.86 DE 3624959

(43) Veröffentlichungstag der Anmeldung:
24.02.88 Patentblatt 88/08

(84) Benannte Vertragsstaaten: **DE FR GB IT**

(71) Anmelder: **MANNESMANN Aktiengesellschaft**
**Mannesmannufer 2**
**D-4000 Düsseldorf 1 (DE)**

(72) Erfinder: **Deppe, Gerd-Joachim, Dr. Dipl. Phys.**
**Eibendonk 24**
**D-4150 Krefeld (DE)**

**Fister, Wilhelm, Dipl.-Ing. Dr.**
**Konrad-Adenauer-Ring 89**
**D-4040 Neuss (DE)**

**Schönartz, Dipl. Phys. Dr.**
**Butzbacher Weg 14**
**D-4000 Düsseldorf (DE)**

(74) Vertreter: **Meissner, Peter E., Dipl.-Ing. et al**
**Meissner & Meissner Patentanwälte Herbertstrasse 22**
**D-1000 Berlin 33 Grunewald (DE)**

(54) **Automatisches Verfahren zur berührungslosen dreidimensionalen Vermessung von Objekten grosser Ausdehnung.**

(57) Die vorliegende Erfindung betrifft ein automatisches Verfahren zur berührungslosen dreidimensionalen Vermessung von Objekten mit großer Ausdehnung, wie z. B. Freiform-Schmiedestücken oder dergleichen, mit hoher Meßgenauigkeit. Automatische dreidimensionale Meßverfahren von Objekten sind bislang nicht bekannt. Manuelle Verfahren sind nachteilig und nicht immer durchführbar, wenn beispielsweise wegen Hitzeentwicklung der Raum um die Objekte nicht betreten werden kann. Zur Automatisierung der dreidimensionalen Vermessung schlägt die Erfindung vor, motorisch verschwenkbare Kamera-Sensoren zu verwenden, die einen charakteristischen Punkt auf der Oberfläche des Objektes in Bild- und Winkellage erfassen und die Daten in einem Rechner so verarbeiten, daß sich die Lage des Punktes im dreidimensionalem Raum ergibt. Die Verknüpfung mehrerer Meßpunkte ermöglicht die Dimensionsbestimmung des Objektes.

Fig.5

EP 0 256 968 A1

**Beschreibung**

Automatisches Verfahren zur berührungslosen dreidimensionalen Vermessung on Objekten großer Ausdehnung

Die Erfindung betrifft ein automatisches Verfahren zur berührungslosen dreidimensionalen Vermessung von Objekten mit großer Ausdehnung, wie zum Beispiel Freiform-Schmiedestücken oder dergleichen, mit hoher Meßgenauigkeit.

Zum Vermessen großer Werkstücke sind verschiedene Verfahren bekannt, von denen das einfachste das nicht automatische Antasten mit Hilfe von Maßbändern, Meßlatten, Zirkeln oder dergleichen ist. Nachteilig dabei ist es, daß dieses Meßverfahren subjektiv und ungenau ist, zur Datenverarbeitung nur bedingt durch manuelle Eingabe verwertbar ist und bei bestimmten Meßobjekten, die für Personal nicht oder nur schwer zugängig sind, nicht anwendbar ist. Dies beispielsweise bei Werkstücken sehr hoher Temperaturen.

Ein anderes Verfahren zur Vermessung großer Werkstücke ist das geodätische Verfahren, das in moderner Version mit zwei Theodoliten arbeitet. Erfaßt werden bei diesem Verfahren die Winkelstellungen der Theodoliten, nachdem der zu vermessende Punkt mit dem Auge anvisiert wurde. Die Datenverarbeitung in einem Rechnersystem ist bei diesem Verfahren zwar möglich, doch ist das Nachführen von Hand und Anpeilen mit dem Auge infolge des schwierigen und langwierigen Einjustierens nachteilig.

Des weiteren ist es bekannt, berührungslose Dimensionsmessung mit ein- oder zweidimensionalen fest angeordneten Kanera-Sensoren (Röhre oder Halbleiter) vorzunehmen. Dazu müssen allerdings Abstand und Winkellage des Meßobjektes bekannt sein. Außerdem ist aufgrund der begrenzten geometrischen Auflösung und Nichtlinearität in Optik und Sensor geringe Meßgenauigkeit bei großen Objekten zu erwarten.

Der vorliegenden Erfindung liegt ausgehend von den bekannten Meßverfahren die Aufgabe zugunde, ein atomatisches Verfahren zur berührungslosen dreidimensionalen Vermessung von großen Objekten, beispielsweise Freiform-Schmiedestücken, zu schaffen, das sich durch große Meßgenauigkeit auszeichnet.

Zur Lösung der Aufgabe wird erfindungsgemäß vorgeschlagen, daß das Objekt, bzw. Teile des Objektes mit Hilfe von mindestens zwei im definierten Abstand zueinander angeordneten zweidimensionalen berührungslos arbeitenden Sensoren erfaßt wird bzw. werden, indem mit Methoden der Mustererkennung Schnittpunkte von Konturlinien order andere charakteristische Punkte auf dem Objekt aus dem von jedem Sensor gelieferten Bild herausgearbeitet und durch motorisches Verschwenken der Sensoren um zwei Achsen ein ermittelter charakteristischer Punkt auf der Oberfläche des Objektes jeweils in eine definierte Position innerhalb des Bildfeldes des Sensors gelegt wird, wonach durch Auswertung der Winkelstellungen der Sensoren die Lage des charakteristischen Punktes im dreidimensionalen Raum ermittelt und durch Verknüpfung mehrerer solcher Meßpunkte, zum Beispiel in einem Rechner, die Dimension des Objektes bestimmt wird.

Dieses vorgeschlagene Meßverfahren arbeitet automatisch und schaltet deshalb subjektive Einflüsse von manuell in das System eingreifendem Personal aus, so daß im Ergebnis eine wesentlich höhere Meßgenauigkeit erwartet werden kann. Des weiteren macht es das Verfahren möglich, auch nicht oder nur schwer zugängige Meßobjekte, beispielsweise heiße Schmiedestücke, in drei Dimensionen zu erfassen, um somit die Abmessungen des Objektes bestimmen zu kömmen. Dabei ist es nicht erforderlich, Abstand und Winkellage des Meßobjektes zu kennen.

Nach einem weiteren Merkmal der Erfindung wird vorgeschlgen, daß der charakteristische Punkt auf dem Objekt extern markiert wird, beispielsweise durch den Lichtfleck eines Lasers. Durch die Schaffung eines solches Bezugspunktes können beliebige Punkte auf dem Objekt vermessen und die Meßgenauigkeit erhöht werden.

Nach einem anderen Merkmal des erfindungsgemäßen Verfahren ist vorgesehen, daß zur Vermessung von gestörten bzw. innerhalb der Projektionsfläche liegenden Kanten bekannte Verfahren der Konturverstärkung und/oder Mustererkennung angewendet werden. Diese Verfahren dienen der Verbesserung der Genauigkeit bei der Dimensionserfassung und damit dem exakteren Meßergebnis.

Nach einem weiteren Vorschlag der Erfindung ist vorgesehen, daß beim Vermessen nicht selbstleuchtender Objekte fremde Beleuchtung in Form von Auf- oder Durchlicht verwendet wird.

Das erfindungsgemäße Verfahren eignet sich nach einem Merkmal besonders zur Ankopplung an den Rechner einer Bearbeitungsmaschine, so daß nach einem weiteren Merkmal vorgeschlagen wird, daß zur Vorpositionierung der Sensoren zusätzliche Informationen über die zu erwartende Lage und Dimension des Objektes, beispielsweise von einer Programmsteuerung verwendet werden. Diese Vorpositionierung erhöht wegen der dadurch möglichen Verkleinerung des Meßfeles wesentlich die Meßgenauigkeit und verkürzt den Zeitaufwand für die Vermessung des Objektes, wodurch letztlich eine Produktionserhöhung zu erwarten ist.

In Umkehrung dazu können nach einem weiteren Merkmal der Erfindung die Meßergebnisse der Steuerung einer Bearbeitungsmaschine für das Objekt zugeführt werden, so daß eine weitgehende Automatisierung des Fertigungsvorganges denkbar ist.

Die Erfindung wird anhand der beiliegenden Zeichnungsfiguren nachfolgen erläutert. Es zeigt:

Fig. 1 ein Schemabild der verwendeten Kamera,

Fig. 2 den Ausschnitt eines zu vermessenden Schmiedestückes,

Fig. 3 das von der Kamera erfaßte Bild,

Fig. 4 das Blockschema der Datenverarbeitung und

Fig. 5 schematisch die Mechanik des Kamera-Sensors.

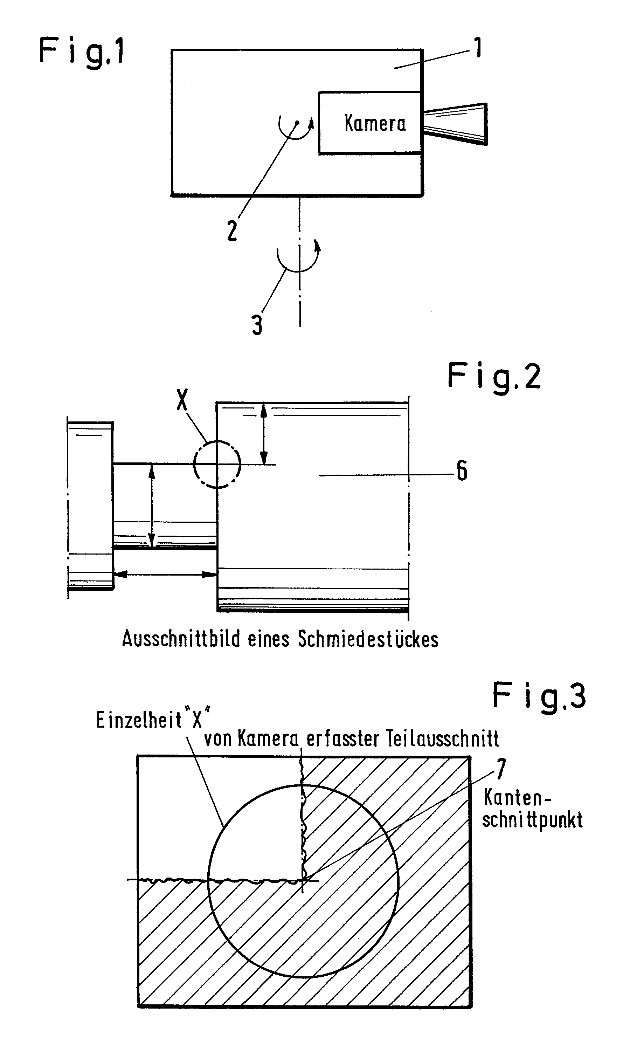

Wie in Fig. 1 grob vereinfacht erkennbar, sind die verwendeten Kamera-Sensoren 1, von denen zei Stück verwendet werden, um zwei senkrecht aufeinander stehende Achsen 2 und 3 schwenkbar.

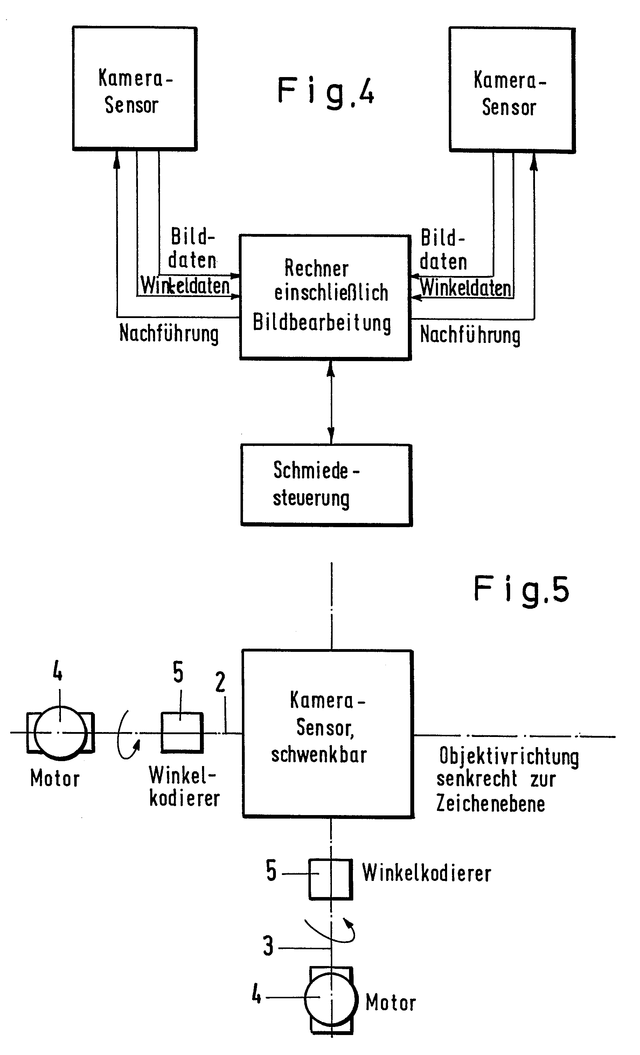

Wie aus Fig. 5 erkennbar, erfolgt die Verschwenkbewegung mittels der Motoren 4, die auf jeder Achse vorgesehen sind. Die jeweilige Winkelstellung der Kamera-Sensoren, deren Objektivrichtung (Fig. 5) senkrecht zur Zeichnungsebene verlaufen soll, wird mit Hilfe der Winkelkodierer 5 erfaßt, so daß bei bekanntem Abstand der Kamera---Sensoren voneinander trigonometrische Entfernungsmessungen zum Objekt vorgenommen werden können.

In Fig. 2 ist das Ausschnittbild eines Schmiedestückes 6 dargestellt, wobei der von den Kameras erfaßte Bildausschnitt mit X gekennzeichnet ist. Dieser Bildausschnitt wird von jeder der beiden Kameras 1 geliefert und mit den Methoden der Mustererkennung wird der Kanten-Schnittpunkt 7 in Fig. 3 herausgearbeitet. Dieser Schnittpunkt kann durch motorisches Verschwenken der Kamera-Sensoren 1 in eine definierte Position innerhalb des Bildfeldes des jeweiligen Sensors gelegt werden, so daß durch Auswertung der Winkelstellungen beider Kamera-Sensoren 1 über die Winkelkodierer 5 die Lage des Schnittpunktes 7 im dreidimensionalen Raum ermittelt werden kann. Werden nun mehrere solcher Meßvorgänge nacheinander durchgeführt und die Ergebnisse miteinander verknüpft, so lassen sich beliebige Dimensionen des zu vermessenden Objektes bestimmen.

Das entsprechende Schema ist in Fig. 4 dargelegt, aus dem erkennbar ist, daß die Kamera-Sensoren 1 sowohl die über die Winkelkodierer 5 erfaßten Winkeldaten als auch die von den Kameras erfaßten Bilddaten einem Rechner mit integrierter Bildverarbeitung zuführen, der auch die Nachführung der Kamera-Sensoren über die Stellmotoren 4 bewirkt und somit das Einstellen der Kamera-Sensoren auf den charakteristischen Punkt des Objektes ermöglicht. Das vom Rechner gelieferte Ergebnis kann unmittelbar zur Steuerung, beispielsweise des Schmiedemanipulators, verwendet werden. Ebenso ist es möglich, das automatisierte Programm des Schmiedemanipulators zur Vorjustierung der Kamera-Sensoren zu verwenden.

**Patentansprüche**

1. Automatisches Verfahren zur berührungslosen dreidimensionalen Vermessung von Objekten mit großer Ausdehnung, wie zum Beispiel Freiform-Schmiedestücken oder dergleichen, mit hoher Meßgenauigkeit,
dadurch gekennzeichnet,
daß das Objekt bzw. Teile des Objektes mit Hilfe von mindestens zwei im definierten Abstand zueinander angeordneten zweidimensionalen berührungslos arbeitenden Sensoren erfaßt wird bzw. werden, indem mit Methoden der Mustererkennung Schnittpunkte von Konturlinien oder andere charakteristische Punkte auf dem Objekt aus dem von jedem Sensor gelieferten Bild herausgearbeitet und durch motorisches Verschwenken der Sensoren um zwei Achsen ein ermittelter charakteristischer Punkt auf der Oberfläche des Objektes jeweils in eine definierte Position innerhalb der Bildfeldes des Sensors gelegt wird, wonach durch Auswertung der Winkelstellungen der Sensoren die Lage des charakteristischen Punktes im dreidimensionalen Raum ermittelt, und durch Verknüpfung mehrerer solcher Meßpunkte zum Beispiel in einem Rechner die Dimension des Objektes bestimmt wird.

2. Verfahren nach Anspruch 1,
dadurch gekennzeichnet,
daß der charakteristische Punkt auf dem Objekt extern markiert wird, beispielsweise durch den Lichtfleck eines Lasers.

3. Verfahren nach Anspruch 1 oder 2,
dadurch gekennzeichnet,
daß zur Vermessung von gestörten bzw. innerhalb der Projektionsfläche liegenden Kanten bekannte Verfahren der Konturverstärkung und/oder Mustererkennung angewendet werden.

4. Verfahren nach Anspruch 1 - 3,
dadurch gekennzeichnet,
daß beim Vermessen nichtselbstleuchtender Objekte Fremdbeleuchtung in Form von Auf- oder Durchlicht verwendet wird.

5. Verfahren nach Anspruch 1 - 4,
dadurch gekennzeichnet,
daß zur Vorpositionierung der Sensoren zusätzliche Informationen über die zu erwartende Lage und Dimension des Objektes, beispielsweise von einer Programmsteuerung verwendet werden.

6. Verfahren nach Anspruch 1 - 5,
dadurch gekennzeichnet,
daß die Meßergebnisse der Steuerung einer Bearbeitungsmaschine für das Objekt zugeführt werden.

0256968

## Fig.1

Kamera

1

2

3

## Fig.2

X

6

Ausschnittbild eines Schmiedestückes

## Fig.3

Einzelheit "X"
von Kamera erfasster Teilausschnitt

7
Kanten-
schnittpunkt

0256968

Fig.4

Kamera-Sensor

Kamera-Sensor

Bilddaten

Winkeldaten

Rechner einschließlich Bildbearbeitung

Bilddaten

Winkeldaten

Nachführung

Nachführung

Schmiede-steuerung

Fig.5

4 5 2

Motor

Winkel-kodierer

Kamera-Sensor, schwenkbar

Objektivrichtung senkrecht zur Zeichenebene

5 Winkelkodierer

3

4 Motor

**Europäisches Patentamt**

**EUROPÄISCHER RECHERCHENBERICHT**

Nummer der Anmeldung

EP 87730044.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR - A1 - 2 517 052 (CENTRE NATIONAL) <br> * Gesamt * <br> -- | 1,2,4 | G 01 B 11/24 <br> G 01 B 11/00 |
| A | EP - A1 - 0 140 972 (SHIMIZU) <br> * Anspruch 1; Fig. 3; Seite 21, Zeile 35 - Seite 25, Zeile 5 * <br> -- | 1,3 | |
| A | EP - A1 - 0 134 597 (OPTISCHE INDUSTRIE) <br> * Zusammenfassung; Seiten 17, 18; Fig. 4 * <br> ---- | 1,2,4 | |
| | | | **RECHERCHIERTE SACHGEBIETE (Int. Cl.4)** <br><br> G 01 B 11/00 <br> G 01 B 21/00 <br> G 01 C 3/00 <br> G 01 C 11/00 |

Der vorliegende Recherchenbericht wurde für alle Patentansprüche erstellt.

| Recherchenort | Abschlußdatum der Recherche | Prüfer |
|---|---|---|
| WIEN | 30-11-1987 | TOMASELLI |